# EUROPÄISCHE PATENTANMELDUNG

(11) **EP 1 331 410 A1**
(43) Veröffentlichungstag der Anmeldung: **30.07.2003**
(21) Anmeldenummer: 03000171.3
(22) Anmeldetag: 07.01.2003
(51) Int. Cl.: F16C 25/08

(54) **Spielfreie Drehlagerung**

(30) Priorität: 19.01.2002 DE 10201974
(71) Anmelder: Leica Camera AG, 35606 Solms (DE)
(72) Erfinder: Hengst, Alfred, 35633 Lahnau (DE); Speier, Rolf, 35435 Wettenberg (DE)
(74) Vertreter: Stamer, Harald, Dipl.-Phys.

(57) **Zusammenfassung**

Eine spielfreie Drehlagerung für eine auf einem zylindrischen Korpus (1) in axialer Richtung an Anschlagflächen (10, 11) gehaltene Antriebswalze (2) zeichnet sich dadurch aus, daß zumindest in einer der Stirnflächen (8, 9) der Antriebswalze (2) und der ihr gegenüber liegenden Anschlagfläche (10, 11) am Korpus (1) v-förmige Ringnuten (17, 18) mit einem Öffnungswinkel V vorgesehen sind, in die Ringnuten (17, 18) v-förmige Lagerschalen (13) mit zumindest nahezu gleichem Öffnungswinkel W und annähernd gleicher Schenkellänge eingelegt sind, wobei die Scheiteldurchmesser X, Y der Ringnuten (17, 18) von den Scheiteldurchmessern Z der Lagerschalen (13) abweichen, in die Lagerschalen (13) Kugeln (14) mit einem an die Öffnungsweite der Lagerschalen (13) angepaßten Durchmesser eingelegt sind und zumindest eine der Anschlagflächen (11) zum Einspannen der Antriebswalze (2) in axialer Richtung verstellbar ist. Anstelle unterschiedlicher Scheiteldurchmesser X, Y, Z können auch unterschiedliche Öffnungswinkel V für die Ringnuten (17, 18) und Öffnungswinkel W für die Lagerschalen (13) vorgesehen sein.

## Beschreibung

Die Erfindung betrifft eine spielfreie Drehlagerung für eine auf einem zylindrischen Korpus in axialer Richtung an Anschlagflächen gehaltene Antriebswalze.

Im feinwerktechnischen Gerätebau besteht häufig die Notwendigkeit, drehbare Antriebswalzen vorzusehen, mit denen im Innern eines Gehäuses angeordnete Elemente verstellt werden können. Die Antriebswalze soll dabei von außen betätigt werden und ist in axialer Richtung gegen Verschiebung festgelegt. Als Anwendungen sind z.B. Einstellringe an Objektiven und Fokussiertriebe an Ferngläsern zu nennen.

Aus Platz- und Kostengründen werden üblicherweise zur radialen und axialen Lagerung der Antriebswalzen Gleitlager vorgesehen. Dabei ist es bekannt, daß leichtgängige Gleitlager sowohl in radialer als auch in axialer Richtung notwendigerweise ein Lagerspiel aufweisen. Spielfrei eingestellte Gleitlager sind demgegenüber schwergängig und besitzen temperatur- und lastabhängige Drehmomentunterschiede, wodurch ihre Einsetzbarkeit erheblich eingeschränkt ist.

Aus DE 35 40 322 A1 ist ein Wälzlager bekannt, das aus zwei konzentrischen Tragringen mit annähernd v-förmigen Nuten in den einander zugekehrten Mantelflächen besteht. In die Nuten können ebenfalls v-förmige Einlagen aus Stahl eingefügt werden, die als Laufflächen für die Wälzkörper dienen. Als Wälzkörper können insbesondere kreuzweise angeordnete Walzen, aber auch Kugeln vorgesehen sein, die von einem Käfig gehalten werden können. Der Öffnungswinkel der Nut im Tragring kann geringfügig kleiner als der der Einlage bemessen sein. Bei der Montage des Wälzlagers werden die Einlagen dann über die Wälzelemente durch leicht elastische Verformung in die entsprechenden Nuten in den Tragringen gedrückt. Auf diese Weise entsteht ein federvorgespanntes Wälzlager als Einbauelement, das für einen stoßartigen, erschütterungsreichen und schnelllaufenden Betrieb besonders vorteilhaft sein soll.

Das Wälzlager weist parallel zu den die Nuten tragenden Mantelflächen eine zentrale Bohrung zur Aufnahme der Drehachse eines von dem Wälzlager zu tragenden Bauelementes auf. Die Federvorspannung der Wälzkörper innerhalb des Wälzlagers ist radial zur Bohrung gerichtet. Spielfreiheit der Lagerung des Bauelementes auf der Drehachse kann ausschließlich durch entsprechende Passung der Aufnahme des Wälzlagers im Bauelement und der Drehachse in der Bohrung des Wälzlagers erreicht werden. Auch auf die Lagerung des Bauelementes in axialer Richtung auf der Drehachse hat das Wälzlager selbst keinen Einfluß.

Aus DE 1 929 815 U ist ein Wälzlager mit bezüglich einer Drehachse außen und innen liegenden, in axialer Richtung gegeneinander versetzten Lagerringen großen Durchmessers bekannt. Besondere Druckmittel, die auf die Schulter entweder des äußeren oder inneren Lagerringes einwirken, erzeugen über die Wälzkörper eine permanente Vorspannung gegenüber der Schulter des jeweils anderen Lagerringes. Das Wälzlager ist dadurch in axialer Richtung selbsteinstellend spielfrei und zur Aufnahme großer Axial- und Radiallasten sowie Kippmomente geeignet. In radialer Richtung zur Drehachse ist das Wälzlager nicht einstellbar.

Für den Einbau von üblichen Kugellagern reichen die zur Verfügung stehenden Wandstärken am Gehäuse und bei der Antriebswalze häufig nicht aus. Auch für den Einbau besonderer Vorspannmittel zum Einstellen eines Lagerspiels ist im Feingerätebau häufig nicht genügend Raum vorhanden.

Der Erfindung lag daher die Aufgabe zugrunde, eine axial und radial absolut spielfrei einstellbare und gleichzeitig leichtgängige Lagerung einer Antriebswalze für einen Verstellmechanismus bei stark eingeschränkten Platzverhältnissen zu schaffen. Die Herstellkosten der Lagerung sollten dabei möglichst gering sein.

Diese Aufgabe wird bei einer Drehlagerung der eingangs genannten Art erfindungsgemäß durch die kennzeichnenden Merkmale der Ansprüche 1 und 7 gelöst. Vorteilhafte Ausgestaltungen ergeben sich aus den jeweiligen Unteransprüchen.

Die einander gegenüber liegenden v-förmigen Ringnuten können mit großer Präzision sowohl am Korpus als auch in die Stirnfläche einer Antriebswalze eingedreht werden. Die Wandstärke der Antriebswalze in der Stirnfläche braucht dabei nur wenige mm zu betragen. Die ebenfalls v-förmigen Lagerschalen können als einfache Stanzteile hergestellt werden. Die Verwendung gleicher oberer und unterer Laufflächenelemente für die Kugeln ist bei der Herstellung kostengünstig und bei der Montage vorteilhaft, da keine Verwechslungen beim Einlegen der Lagerschalen entstehen können. Im Vergleich zu der erreichten hohen Präzision der Lagerung sind die Herstell- und Montagekosten sowie der notwendige Platzbedarf für die Lagerung insgesamt als äußerst gering anzusehen.

Bei unterschiedlichen Scheiteldurchmessern für die Ringnuten und die Lagerschalen liegen letztere jeweils nur mit einer Flanke in der zugehörigen Ringnut fest an. Nach dem Einlegen der Kugeln in die Lagerschalen kann sich beim Einspannen der Antriebswalze in axialer Richtung die jeweils freie Flanke der Lagerschale unter dem Druck der Kugeln elastisch verformen. Dabei wird die Leichtgängigkeit der Kugeln nicht behindert und gleichzeitig jegliches Spiel aus der Lagerung entfernt. Die Mittel zur Festlegung der Antriebswalze in axialer Richtung dienen somit gleichzeitig zur Spieleinstellung der Lagerung. Die Antriebswalze zentriert sich dabei in ihrer stirnseitigen Lagerung zusätzlich auch in radialer Richtung. Bei beidseitiger Lagerung der Stirnflächen können Reibungskräfte gegenüber dem zylindrischen Korpus ausgeschlossen werden.

Bei gleichen Scheiteldurchmessern für die Ringnuten und die Lagerschalen liegen die Lagerschalen über beide Flanken an den Flanken der Ringnut an. Aufgrund des geforderten größeren Öffnungswinkels der Lagerschalen gegenüber dem Öffnungswinkel der Ringnuten ist diese Anlage kreisringförmig. Beim Einspannen der Antriebswalze in axialer Richtung werden die Lagerschalen unter Verringerung ihres Öffnungswinkels und Verschiebung des Anlageringes durch den Druck der Kugeln weiter in die Ringnuten hineingedrückt, so daß ebenfalls eine radial und axial spielfreie und leichtgängige Lagerung der Antriebswalze entsteht.

Aufgrund der elastischen Deformierbarkeit der Lagerschalen werden an die Fertigungstoleranzen und an die Einstellgenauigkeiten keine hohen Anforderungen gestellt. Durchmesser, Öffnungswinkel und andere Dimensionierungen, deren Abweichungen im Rahmen üblicher Fertigungstoleranzen liegen, werden im Rahmen der Erfindung daher als gleich angesehen.

In der Figur werden Ausführungsbeispiele der erfindungsgemäßen Lagerung schematisch dargestellt und anhand der Figuren näher beschrieben. Dabei zeigen:
- Fig.1:: die Lagerung eines Triebknopfes in der Gelenkbrücke eines Fernglases,
- Fig.2:: das System aus Lagerschalen und Kugeln,
- Fig.3:: einen Kugelkäfig und
- Fig.4 bis 8:: verschiedene Ausführungsformen mit Variation der Scheiteldurchmesser und Öffnungswinkel für die Ringnuten und Lagerschalen.

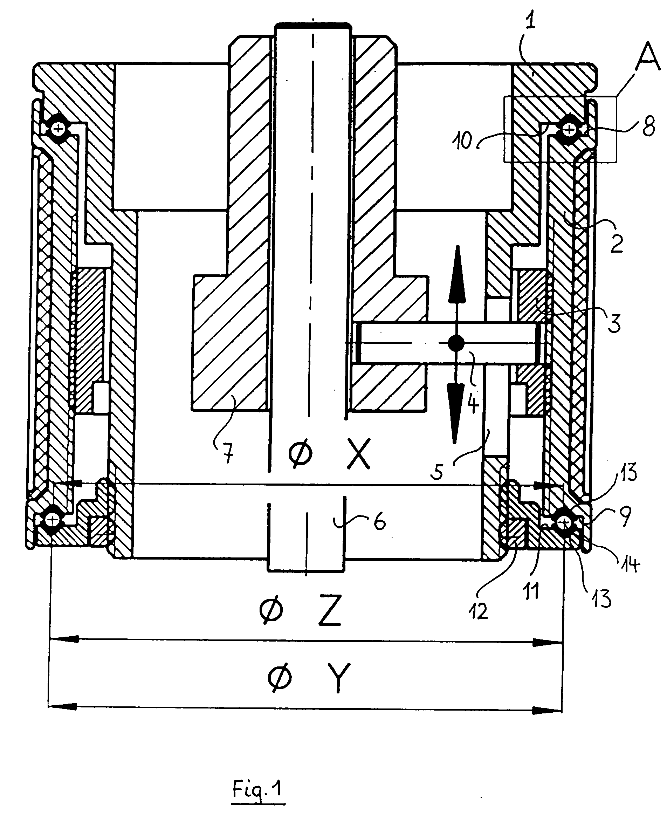

In Fig.1 ist auf einem zylindrischen Korpus 1 eine Antriebswalze 2 drehbar gelagert. Der Korpus 1 ist z.B. Teil der Gelenkbrücke eines Fernglases und die Antriebswalze 2 ist der Triebknopf zur Fokuseinstellung. In der Antriebswalze 2 ist dazu ein Schraubring 3 in einem Gewinde gelagert. In den Schraubring 3 ist ein Stift 4 eingesetzt, der in einem Längsschlitz 5 im Korpus 1 geführt ist. Auf einer zum Korpus 1 gehörenden feststehenden Achse 6 ist eine Hülse 7 längsverschieblich gelagert, die mit dem Stift 4 gekoppelt ist. Bei einer Drehung der Antriebswalze 2 wird in bekannter Weise die Hülse 7 auf der Achse 6 in Pfeilrichtung verschoben. Mit der Hülse 7 sind nicht weiter dargestellte Verstellelemente des Fernglases gekoppelt. Die Übertragung der Verstellkräfte aus der Antriebswalze 2 heraus soll spielfrei und in den Umkehrpunkten ohne Totgang erfolgen. Durch die Lagerung der Antriebswalze 2 sollen keine zusätzlichen Reibungskräfte entstehen, die die Feinfühligkeit der Verstellbewegung behindern könnten.

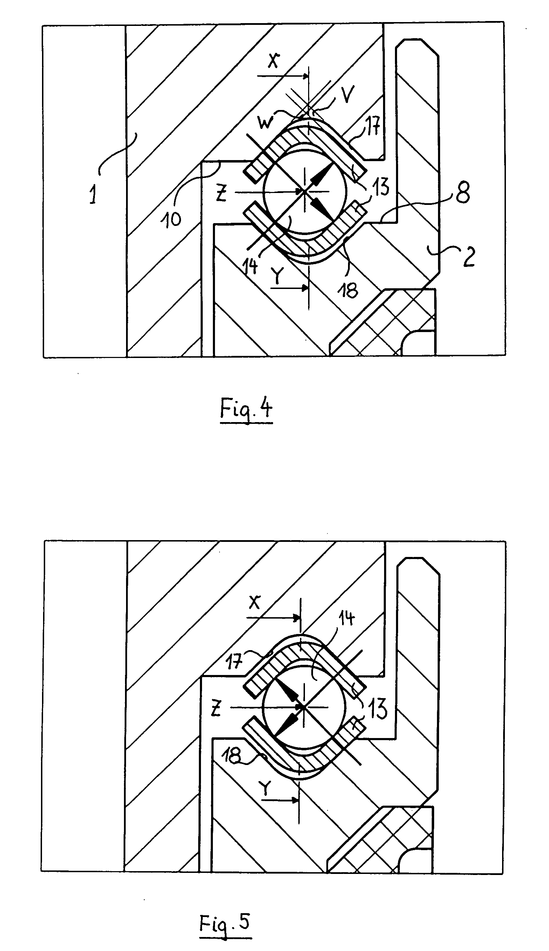

Die im Detailausschnitt A enthaltene Lagerung wird in den Figuren 4 bis 8 noch vergrößert dargestellt. Aus Fig.1 ist zunächst ersichtlich, daß die Antriebswalze 2 mit ihren oberen und unteren Stirnflächen 8, 9 durch die Lagerung gegenüber Anschlägen 10, 11 am Korpus 1 in axialer Richtung gehalten wird. Der Anschlag 11 ist auf den Korpus 1 aufgeschraubt und dient der spielfreien Einstellung des Lagerungen. Er kann durch eine Kontermutter 12 gesichert werden.

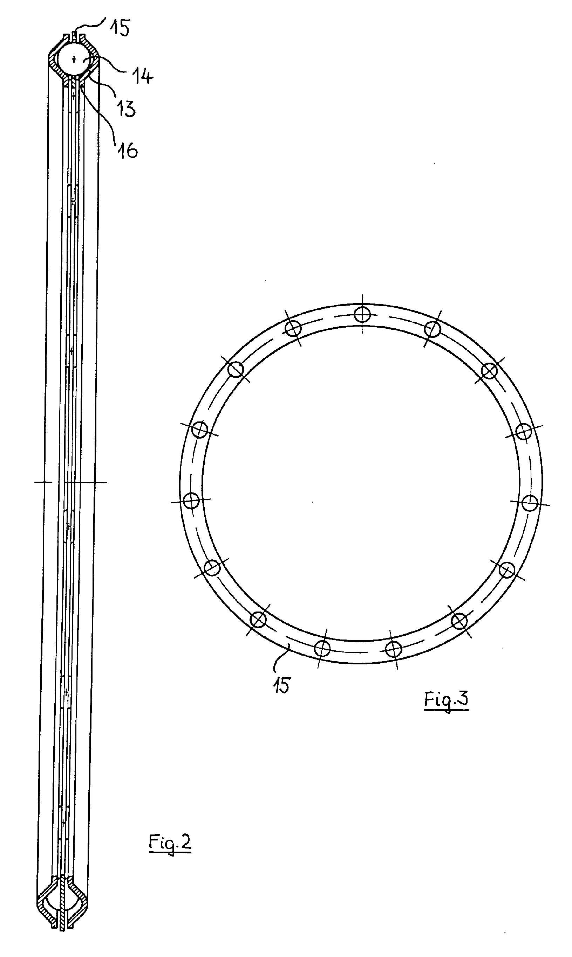

Fig.2 zeigt als Teil der Lagerung das System aus zwei Lagerschalen 13 und Kugeln 14. Zweckmäßigerweise werden die Kugeln 14 durch einen als Ringscheibe ausgebildeten Kugelkäfig 15 auf Abstand gehalten (Fig.3). Es ist jedoch z.B. auch möglich, kurze gebogene Drahtstückchen als Abstandshalter zu verwenden.

Die Lagerschalen 13 sind vorzugsweise als Stanzteile hergestellt und bestehen aus einem federharten Material, das einerseits die erfindungsgemäße Deformation beim Einspannen der Antriebswalze 2 zuläßt und andererseits beim Lauf der Kugeln 14 keinen Abrieb und keine Laufriefen entstehen läßt. Die gegenüber den v-förmigen Laufflächen abgewinkelten Ränder 16 erleichtern die Handhabung, unterstützen die Verwindungsstabilität der Stanzteile und ermöglichen eine Vormontage mit eingelegten Kugeln 14, wenn die beiden Lagerschalen 13 an den Rändern 16 durch nicht dargestellte Klammern zusammengehalten werden.

Fig.4 zeigt eine erste Ausführungsform der Lagerung. In den Anschlag 10 am Korpus 1 ist eine v-förmige Ringnut 17 eingedreht. Ihr gegenüber liegend ist in die Stirnfläche 8 der Antriebswalze 2 ebenfalls eine v-förmige Ringnut 18 eingedreht. Beide Ringnuten 17, 18 haben gleiche Öffnungswinkel V. In die Ringnuten 17, 18 sind Lagerschalen 13 eingelegt, die in diesem Ausführungsbeispiel denselben Öffnungswinkel W = V aufweisen. Die Lagerschalen 13 sind ohne die zu Fig.2 beschriebenen Ränder 16 dargestellt, da es erfindungsgemäß nur auf ihre einander v-förmig gegenüber stehenden Flanken ankommt. Die Schenkellänge der Flanken an den Lagerschalen 13 ist zumindest nahezu gleich der Schenkellänge der Flanken in den Ringnuten 17, 18, um sicherzustellen, daß die in die Lagerschalen 13 eingelegten Kugeln 14 nicht in den Ringnuten 17, 18 laufen können. Die Materialwahl für den Korpus 1 und die Antriebswalze 2 ist daher völlig unabhängig von den Anforderungen an die Laufflächen für die Kugeln 14 möglich.

Die Scheiteldurchmesser X, Y der Ringnuten 17, 18 sind größer als der zunächst mit dem Kugelmittelpunkt übereinstimmenden Scheiteldurchmesser Z der Lagerschalen 13. Beim Einlegen der Lagerschalen 13 in die Ringnuten 17, 18 liegen daher nur die links dargestellten Flanken der Lagerschalen 13 und Ringnuten 17, 18 aneinander an. Die rechts dargestellten Flanken weisen zwischen sich eine Luftspalt auf. Beim Einspannen der Antriebswalze 2 über den schraubbaren Anschlag 11 können sich die rechts dargestellten frei stehenden Flanken der Lagerschalen 13 unter dem Einfluß der von den festliegenden Flanken in Pfeilrichtung ausgehenden und von den Kugeln 14 übertragenen Kraftflüssen elastisch deformieren. Die Kugelmittelpunkte wandern dabei weiter nach rechts und die Kugeln 14 werden weiter in die Lagerschalen 13 hineingedrückt. Dadurch entsteht Spielfreiheit sowohl in radialer als auch in axialer Richtung.

Fig.5 zeigt eine Ausführungsform, bei der die Scheiteldurchmesser X, Y der Ringnuten 17, 18 kleiner als der Scheiteldurchmesser Z der Lagerschalen 13 ist. Im übrigen gelten analoge Betrachtungen und Voraussetzungen wie im vorgenannten Ausführungsbeispiel.

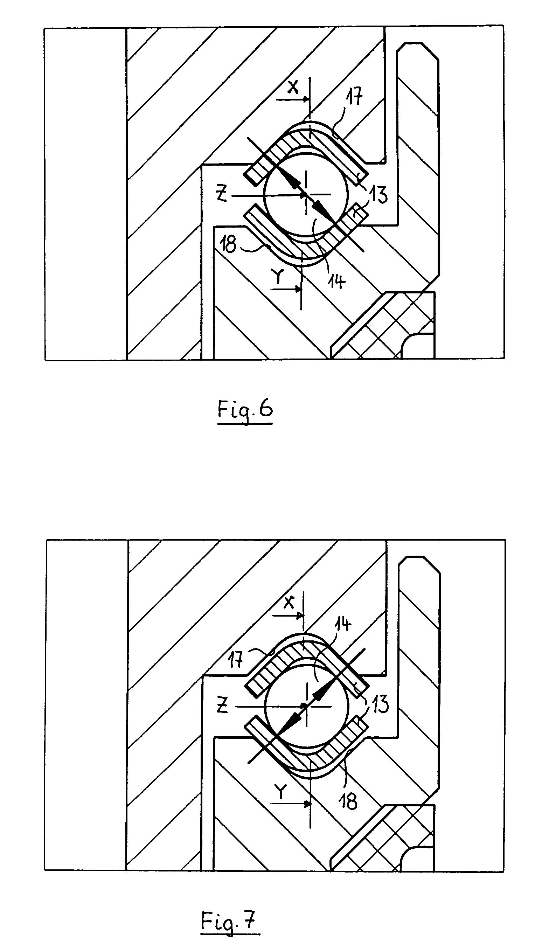

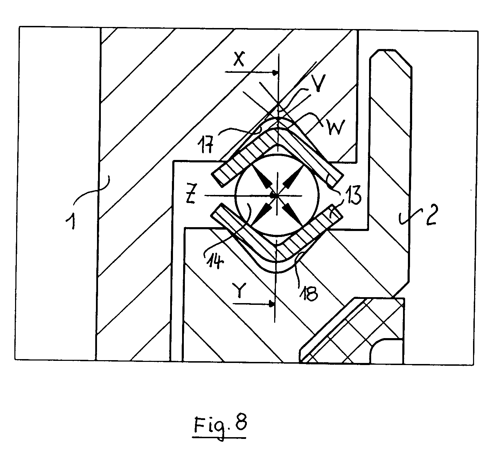

Bei den Ausführungsbeispielen nach den Fig.6 und 7 ist der Scheiteldurchmesser X der einen Ringnut 17 größer oder kleiner, während der Scheiteldurchmesser Y der anderen Ringnut 18 jeweils kleiner oder größer ist als der Scheiteldurchmesser Z der Lagerschalen 13. Dadurch entsteht beim Einspannen der Antriebswalze 2 jeweils ein durch Pfeile dargestellter diagonaler Kraftfluß, durch den die Kugeln 14 gegen die einander ebenfalls diagonal gegenüber liegenden frei stehenden Flanken der Lagerschalen 13 gedrückt werden. Auf diese Weise wird auch hier die axiale und radiale Spielfreiheit erreicht.

Bei dem Ausführungsbeispiel nach Fig.8 sind die Scheiteldurchmesser X, Y, Z der Ringnuten 17, 18 und Lagerschalen 13 gleich. In diesem Fall ist jedoch der Öffnungswinkel W der Lagerschalen 13 größer als der Öffnungswinkel V der Ringnuten 17, 18. Beim Einspannen der Antriebswalze 2 wird unter dem Einfluß der sich in Pfeilrichtung kreuzenden Kraftflüsse der Öffnungswinkel W der Lagerschalen 13 durch elastische Verformung der Flanken beim Hineindrücken in die Ringnuten 17,18 verkleinert. Die elastische Anlage der Lagerschalen 13 in unter Umständen unterschiedlicher Tiefe an den Flanken der Ringnuten 17, 18 bewirkt auch in diesem Ausführungsbeispiel die Spielfreiheit in axialer und radialer Richtung.

Das gemeinsame Grundprinzip der erfindungsgemäßen Lagerung ist die elastische Deformation der Lagerschalen 13 entweder über eine frei stehende Flanke der Laufflächen oder über den Öffnungswinkel der Laufflächen im Zusammenwirken mit den die Lagerschalen 13 aufnehmenden Ringnuten 17, 18. Unabhängig von üblichen Fertigungstoleranzen sollen sich zur Bildung einer deformierbaren Flanke die Scheiteldurchmesser X, Y der Ringnuten 17, 18 vom Scheiteldurchmesser Z der Lagerschalen 13 um mindestens 0,2% und maximal 0,8% unterscheiden. Bei gleichen Scheiteldurchmessern X, Y, Z der Ringnuten 17, 18 und Lagerschalen 13 soll der Öffnungswinkel W der Lagerschalen 13 um mindestens 0,2% und maximal 0,8% größer sein als der Öffnungswinkel V der Ringnuten 17, 18.

Der Kugeldurchmesser ist an die Öffnungsweite der Lagerschalen 13 anzupassen, damit im Montagezustand ein so großer Abstand zwischen den Lagerschalen verbleibt, daß sich diese auch nach dem Einspannen der Antriebswalze 2 nicht berühren. Der Öffnungswinkel der Lagerschalen 13 und Ringnuten 17, 18 kann dabei 90° ± 30° betragen.

### Bezugszeichenliste

- 1: zylindrischer Korpus
- 2: Antriebswalze
- 3: Schraubring
- 4: Stift
- 5: Längsschlitz
- 6: feststehende Achse
- 7: Hülse
- 8, 9: Stirnflächen der Antriebswalze
- 10, 11: Anschläge am Korpus
- 12: Kontermutter
- 13: Lagerschalen
- 14: Kugeln
- 15: Kugelkäfig
- 16: Ränder
- 17: Ringnut im Korpus
- 18: Ringnut in Antriebswalze

## Patentansprüche

1. Spielfreie Drehlagerung für eine auf einem zylindrischen Korpus (1) in axialer Richtung an Anschlagflächen (10, 11) gehaltene Antriebswalze (2), **dadurch gekennzeichnet, daß**
a) zumindest in einer der Stirnflächen (8, 9) der Antriebswalze (2) und der ihr gegenüber liegenden Anschlagfläche (10, 11) am Korpus (1) v-förmige Ringnuten (17, 18) mit einem Öffnungswinkel V vorgesehen sind,
b) in die Ringnuten (17, 18) v-förmige Lagerschalen (13) mit zumindest nahezu gleichem Öffnungswinkel W und annähernd gleicher Schenkellänge eingelegt sind, wobei die Scheiteldurchmesser X, Y der Ringnuten (17, 18) von den Scheiteldurchmessern Z der Lagerschalen (13) abweichen,
c) in die Lagerschalen (13) Kugeln (14) mit einem an die Öffnungsweite der Lagerschalen (13) angepaßten Durchmesser eingelegt sind und
d) zumindest eine der Anschlagflächen (11) zum Einspannen der Antriebswalze (2) in axialer Richtung verstellbar ist.

2. Spielfreie Drehlagerung nach Anspruch 1, **dadurch gekennzeichnet, daß** die Scheiteldurchmesser X, Y der Ringnuten (17, 18) größer als die Scheiteldurchmesser Z der Lagerschalen (13) sind.

3. Spielfreie Drehlagerung nach Anspruch 1, **dadurch gekennzeichnet, daß** die Scheiteldurchmesser X, Y der Ringnuten (17, 18) kleiner als die Scheiteldurchmesser Z der Lagerschalen (13) sind.

4. Spielfreie Drehlagerung nach Anspruch 1, **dadurch gekennzeichnet, daß** der Scheiteldurchmesser X der einen Ringnut (17; 18) größer und der Scheiteldurchmesser Y der anderen Ringnut (17; 18) kleiner als der Scheiteldurchmesser Z der Lagerschalen (13) ist.

5. Spielfreie Drehlagerung nach einem der vorhergehenden Ansprüche, **dadurch gekennzeichnet, daß** die Öffnungswinkel V, W der v-förmigen Ringnuten (17, 18) und der Lagerschalen (13) 90° ± 30° betragen.

6. Spielfreie Drehlagerung nach einem der vorhergehenden Ansprüche, **dadurch gekennzeichnet, daß** die Scheiteldurchmesser X, Y der Ringnuten (17, 18) von den Scheiteldurchmessern Z der Lagerschalen (13) um mindestens 0,2 % und maximal 0,8 % abweichen.

7. Spielfreie Drehlagerung für eine auf einem zylindrischen Korpus (1) in axialer Richtung an Anschlagflächen (10, 11) gehaltene Antriebswalze (2), **dadurch gekennzeichnet, daß**
a) zumindest in einer der Stirnflächen (8, 9) der Antriebswalze (2) und der ihr gegenüber liegenden Anschlagfläche (10, 11) am Korpus (1) v-förmige Ringnuten (17, 18) mit einem Öffnungswinkel V vorgesehen sind,
b) in die Ringnuten (17, 18) v-förmige Lagerschalen (13) mit einem größeren Öffnungswinkel W und annähernd gleicher Schenkellänge eingelegt sind, wobei die Scheiteldurchmesser X, Y, Z der Ringnuten (17, 18) und der Lagerschalen (13) zumindest nahezu gleich sind,
c) in die Lagerschalen (13) Kugeln (14) mit einem an die Öffnungsweite der Lagerschalen (13) angepaßten Durchmesser eingelegt sind und
d) zumindest eine der Anschlagflächen (11) zum Einspannen der Antriebswalze (2) in axialer Richtung verstellbar ist.

8. Spielfreie Drehlagerung nach Anspruch 7, **dadurch gekennzeichnet, daß** der Öffnungswinkel W der Lagerschalen (13) um mindestens 0,2% und maximal 0,8% größer ist als der Öffnungswinkel V der Ringnuten (17, 18).

9. Spielfreie Drehlagerung nach einem der vorhergehenden Ansprüche, **dadurch gekennzeichnet, daß** beiden Stirnflächen (8, 9) der Antriebswalze (2) diese Drehlagerung zugeordnet ist.

10. Spielfreie Drehlagerung nach einem der vorhergehenden Ansprüche, **dadurch gekennzeichnet, daß** zwischen den Kugeln (14) Abstandshalter vorgesehen sind.

11. Spielfreie Drehlagerung nach Anspruch 10, **dadurch gekennzeichnet, daß** als Abstandshalter ein als Ringscheibe ausgebildeter Kugelkäfig (15) vorgesehen ist.

12. Spielfreie Drehlagerung nach einem der vorhergehenden Ansprüche, **dadurch gekennzeichnet, daß** die Lagerschalen (13) aus federhartem Material bestehen.
